# EUROPEAN PATENT APPLICATION

(11) **EP 2 889 495 A1**
(43) Date of publication of application: **01.07.2015**
(21) Application number: 12883323.3
(22) Date of filing: 18.12.2012
(51) Int. Cl.: F16C 1/04

(54) **FLEXIBLE AND ELASTIC ROTARY TRANSMISSION SHAFT**

(30) Priority: 22.08.2012 BR 1221029
(71) Applicant: Janice, Silvestri, 99034-140 Passo Fundo - Rio Grande do Sul (BR)
(72) Inventor: Janice, Silvestri, 99034-140 Passo Fundo - Rio Grande do Sul (BR)
(74) Representative: Cutropia, Gianluigi
(86) International application number: PCT/BR2012/000526
(87) International publication number: WO 2014/028989

(57) **Abstract**

The present invention patent application relates to a flexible and elastic rotary transmission shaft for the rotational transmission of force in three dimensions between two points. The main features of the shaft are its flexibility, which allows it to form horizontal, vertical, transverse and swinging angles between the transmission points, and the capacity to stretch, bend and retract to the initial state of rest, while continuing to transmit continuous and intermittent rotation. The shaft is formed by a helical spring (2) that cooperates with a chain (4), the spring and the chain being attached by a locking pin (6 and 6a), and being able to rotate on bearings (9 and 9a) housed in the bearing supports (10 and 10a), forming a compact assembly.

## Description

The present patent application aims at a flexible elastic rotating shaft drive, not observed in the present state of technique, in which it was developed for the transmission of rotational tri mechanical power between two points. That brings as its main characteristics the condition to flex between transmission points in horizontal, vertical, crossing and pendular angles, as well as to present the condition of stretching, bending and contracting to the rest starting point, keeping the rotation transmission continuous and intermittent.

Its production will be in charge of the mechanical parts and equipment industries intended to.

Currently, the shaft being used as a shaft a transmission component, responsible for emitting the torque that needs to maintain a joint force transfer is the cardan shaft. Their ends have joints called universal moving joints, where the movement from power generator point A in relation to point B that receives the rotational power, suffering a tridimensional misalignment.

As the author learned the technique known and seeking to overcome it, in order to provide new technologies to the machinery and equipment industry, this application was developed and it consists of a shaft that performs the connection between power generation point A, to the receiving the rotational power point B, regardless the tridimensional movement between point A to B. That is, even if point A remains stationary, point B can move forward, backward, sideways, up and down, and finally, it can perform a tridimensional movement without losing the torque power provided between point A and point B.

Thus, the author could use the flexible elasticity application of the storing mechanical energy from the helical spring torsion, either of a round or square profile, among others. In order to jointly work with the chain rings that pierces its interior comprising one piece, which allows to be twisted, stretched or shrunk, as well as to promote curve and tridimensional movements, without losing the strength and synchronization with the rotating mechanical strength transmission, further reducing shocks and vibration transmitted from the power generating point A to point B, and vice versa.

The Figures attached clearly show the shaft, which together with the following detailed numerical references is easier to understand.

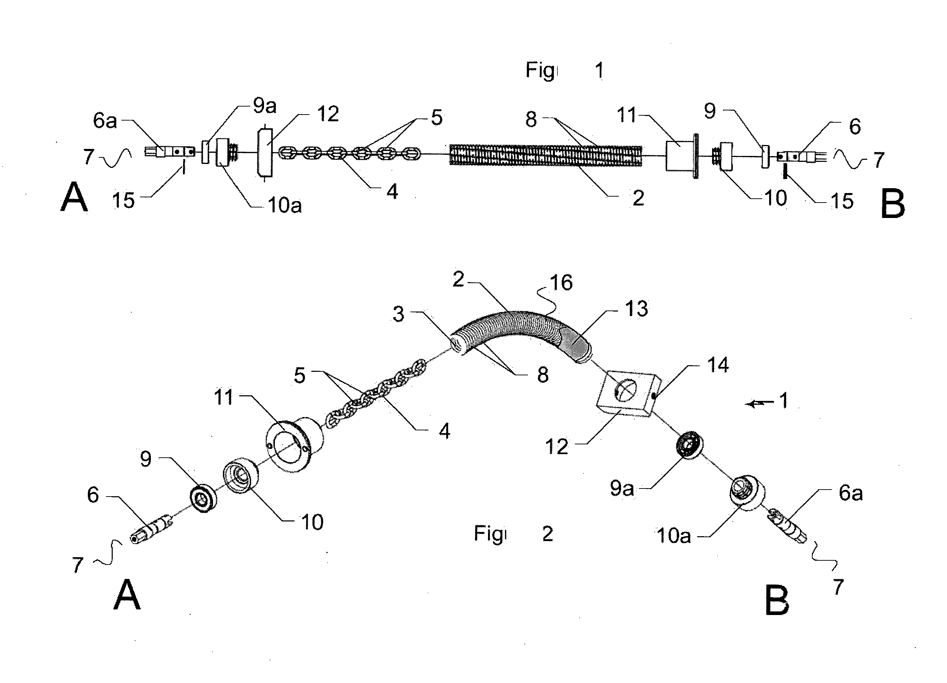

Figure 1 presents an exploded perspective view of the flexible elastic shaft, showing a straight and linear spring.
Figure 2 presents an exploded perspective view of the flexible elastic shaft, with a curved spring.

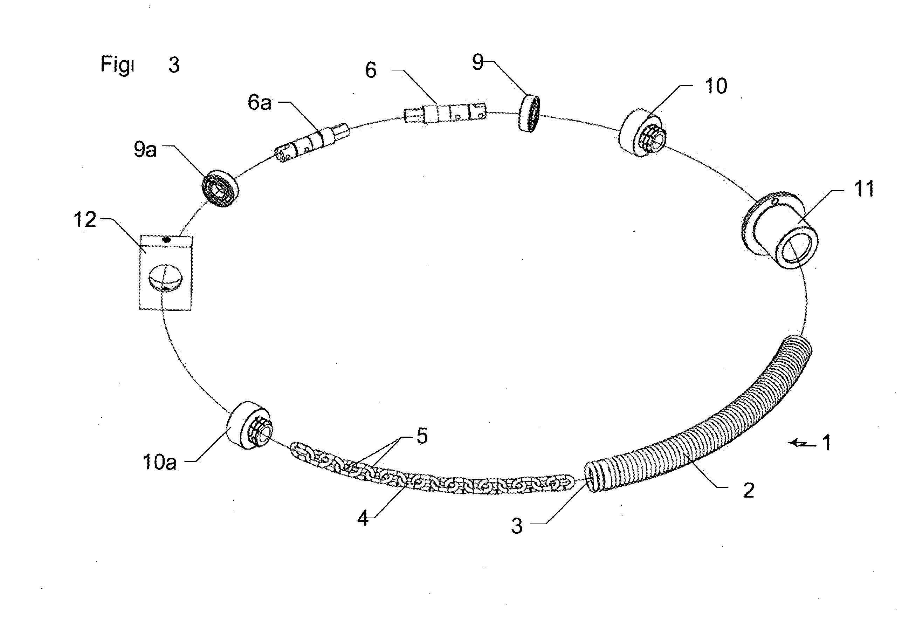

Figure 3 presents an exploded perspective view of the flexible elastic shaft, showing the sequence of fitting and assembling.

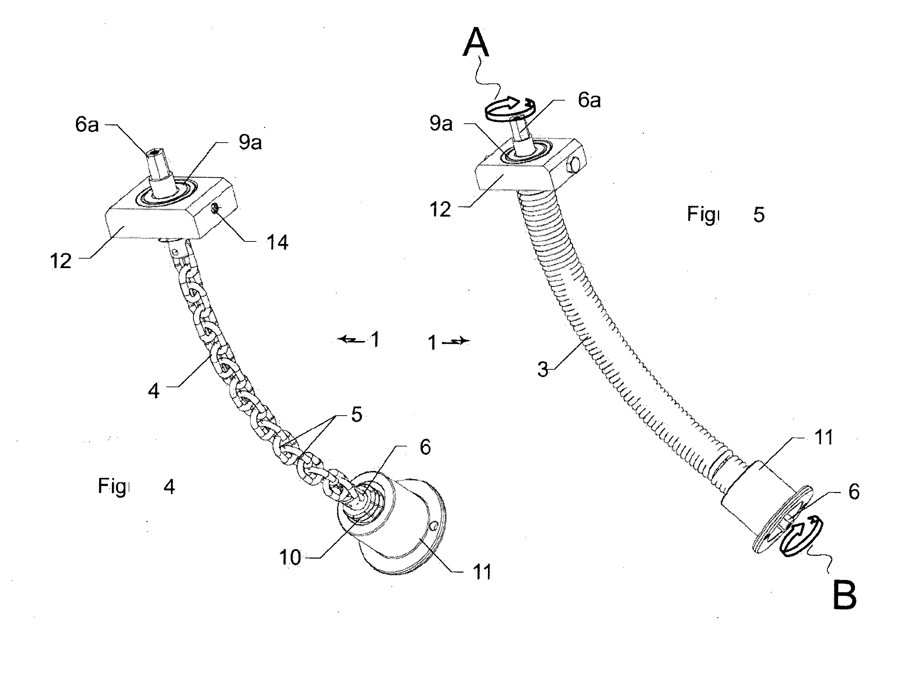

Figure 4 shows a perspective view of the spring assembly without presenting the chain and its fittings in their bearings, pins and bushings.
Figure 5 shows a view in complete perspective of flexible elastic shaft drive mounted.

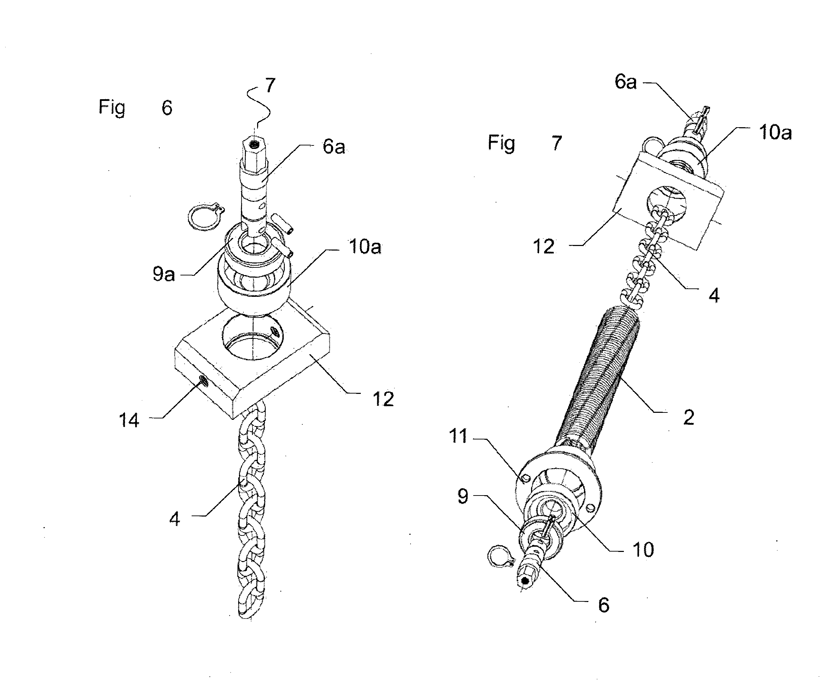

Figure 6 shows a partial exploded perspective view of a sequence and assembly of coupling at one of the ends.
Figure 7 presents an exploded perspective view of the flexible elastic shaft.

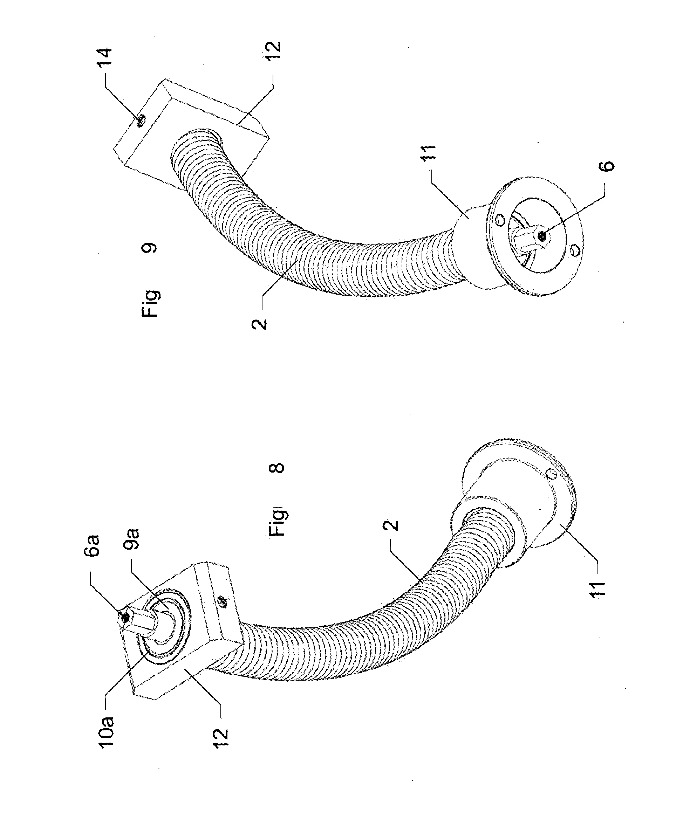

Figure 8 shows a perspective view of the front of the flexible elastic shaft drive mounted.
Figure 9 shows a perspective view from the rear of the flexible elastic shaft drive mounted.

The present application is characterized by a shaft (1) comprised by the union of a helical spring (2) which receives in its central tunnel (3) the longitudinal passage of a chain (4) of rings (5) fixed by the locking pin (6 and 6a) positioned on the ends (7) which fit into the bearings (9 and 9a) accommodated in the bearing bracket (10 and 10a) forming a compact set in the cylindrical flange (11) and the square flange (12) with a hole (14) longitudinal to the groove/pin screw (15).

The shaft (1) shows mechanical conditions to be flexed between the points of generation of mechanical power (A) enough to receiving the transmission of power rotation (B) in horizontal, vertical, transversal and pendular angles, and also presenting conditions of stretching, bending and contracting to the rest starting point while maintaining the rotating transmission (swivel) of continuous and intermittent from the chain (4) in relation to the point of generation of mechanical power (A) to the point of receiving the transmission of the rotation of mechanical power (B).

The profile, thickness and distance of the spirals (8) of the spring (4) as well as the thickness and the distance between the rings (5) of the chain (4), will vary according to your marketing, application, torque, percentage of elasticity, percentage flexibility or range of motion.

The shaft (1) has the capability to rotate at unidirectional or bidirectional way through use of specific bearings (9) depending on each application.

The shaft (1) at its ends (7) has locking pins (6 and 6a), that can vary in shape to suit the several fixing points, to meet various applications requirements, depending on the needs of application, receiving further surface treatment, such as special paints, zinc-plated or other types of protective coatings.

The outer surface (16) of the spring (2) may be protected by flexible cover (13) through vulcanization, bellows of different materials, among other materials.

The spring (2) maintains the current (4) wrapped in its central tunnel (3) preventing it from being overlapped or bent, thus besides the current having its rotational spin free and independent. The spring (2) in turn also, in its tridimensional twist, absorbs the energy of deformation and subsequently responds to its initial resting state.

The present descriptive report relates to an elastic rotating shaft drive that is constituted of a functional, practical, safe and easy to handle application. Engaging features and presenting all the requirements and demands of strength and safety necessary that its application requires, combining modifications of known elements in unprecedented innovative shape and arrangement in the market.

## Claims

1. Flexible elastic rotating shaft drive **characterized by** a shaft (1) formed by the union of a helical spring (2) that gets into its central tunnel (3) the longitudinal passage of a current (4) of rings (5) fixed in the locking pin (6 and 6a) positioned on the ends (7) which are fitted into the bearings (9 and 9a) accommodated in the bearing bracket (10 and 10a) forming a compact embedded in the cylindrical flange (11) and square flange (12) with a hole (14) of longitudinal snap pin/screw fitting (15).

2. A shaft according to claim 1 **characterized in that** the shaft (1) provides mechanical conditions to flex between the points of generation of mechanical power (A) to the point of receiving the transmission of rotation mechanical power (B) in horizontal, vertical, transversal and pendular angles.

3. A shaft according to claim 1 **characterized in that** the shaft (1) presents conditions of mechanical stretching, bending and contracting.

4. A shaft according to claim 1 **characterized in that** the profile, thickness and distance from spirals (8) of the spring (4) as well as the thickness and the distance between the rings (5) of the chain (4) vary.

5. A shaft according to claim 1 **characterized in that** the shaft (1) has the ability to rotate uni-directionally or bi-directionally through use of bearings (9).

6. A shaft according to claim 1 **characterized in that** the shaft (1) at its ends (7) has locking pins (6 and 6a), which can vary in its geometric shape.

7. A shaft according to claim 1 **characterized in that** the outer surface (16) of the helical spring (2) is protected by flexible cover (13) through vulcanization bellows of different materials.

8. A shaft according to claim 1 **characterized in that** the helical spring (2) maintains the current (4) stowed in its central tunnel (3) preventing its overlapping or bend.

9. A shaft according to claim 1 **characterized in that** the rotating transmission received by the locking pin (6) positioned at the end (7) is transferred by the chain (4) of rings (5) for the locking pin (6a) at the opposite end (7).

10. A shaft according to claim 1 **characterized in that** the rotating transmission received by the locking pin (6) positioned at the end (7) is transferred by the chain (4) of rings (5) for the locking pin (6a) at the opposite end (7) regardless the curvature presented by the spring (2).

11. A shaft according to claim 1 **characterized in that** the bearings (9 and 9a) allow free rotation of the chain (4) into the central tunnel (3) of the spring (2).

12. A shaft according to claim 1 **characterized in that** the helical spring (2) and chain (5) receive tridimensional twisting and subsequently return to its initial rest state.
